# EUROPÄISCHE PATENTSCHRIFT

(11) **EP 2 770 339 B1**
(45) Veröffentlichungstag und Bekanntmachung des Hinweises auf die Patenterteilung: **27.11.2019**
(21) Anmeldenummer: 13156711.7
(22) Anmeldetag: 26.02.2013
(51) Int. Cl.: G01S 17/42, G01B 11/02, H04W 56/00, H04Q 9/00, G01D 5/244

(54) **Sensorsynchronisationsverfahren und ebensolches Sensormesssystem**
Sensor synchronisation method and corresponding sensor measuring system
Procédé de synchronisation de capteurs et système de capteurs correspondant

(43) Veröffentlichungstag der Anmeldung: 27.08.2014
(73) Patentinhaber: Hexagon Technology Center GmbH, 9435 Heerbrugg (CH)
(72) Erfinder: Fritsch, Robert, CH-9436 Balgach (CH)
(74) Vertreter: Kaminski Harmann

(56) Entgegenhaltungen:
- EP-A1- 2 533 022
- DE-A1-102010 039 947
- JP-A- H02 176 452
- US-A1- 2006 066 836
- US-A1- 2007 088 775
- US-A1- 2009 268 021

## Beschreibung

Die Erfindung betrifft ein Sensorsynchronisationsverfahren nach dem Oberbegriff des Anspruchs 1 sowie ein Sensormesssystem nach dem Oberbegriff des Anspruchs 13.

In einem Messsystem, das eine Mehrzahl von Sensoren aufweist, ist es häufig erwünscht, Sensorwerte aller Sensoren zeitgleich zu erfassen, um einen zusammengehörigen Datensatz zu erstellen. Soll beispielsweise die Position eines Punktobjektes zu einem bestimmten Zeitpunkt vollständig bestimmt werden, müssen die drei entsprechenden Koordinaten zeitgleich erfasst werden.

Eine Möglichkeit hierzu ist es, an alle beteiligten Sensoren zeitgleich ein Triggersignal auszugeben, das Messwerterfassungen durch die einzelnen Sensoren auslöst. Problematisch ist hierbei, dass i.d.R. trotzdem nicht alle Messwerte zu einem einzigen Zeitpunkt erfasst werden, bedingt durch zeitliche Verzögerungen unterschiedlicher Art. Beispielsweise ergeben sich Verzögerungen wegen unterschiedlicher Signallaufzeiten von Triggersignal und Messsignalen oder wegen differierender Sensoranlaufzeiten und Sensorlatenzzeiten, deren Dauer zudem prozess- oder umgebungsabhängig variieren kann. Das Problem lässt sich nach dem Stand der Technik in manchen Fällen lösen, indem das Aussenden eines solchen Synchronisationssignals nicht zeitgleich an alle Sensoren erfolgt, sondern angepasst an die jeweiligen Verzögerungszeiten zeitlich versetzt. Dies bedeutet allerdings Mehraufwand und setzt Kenntnis der Verzögerungszeiten voraus, die nicht immer ermittelbar sind.

Bei fortlaufenden Messungen, d.h. bei der kontinuierlichen Erstellung von Wertetupeln aus je einem Wert verschiedener Sensoren sind weitere Probleme gegeben. Die einzelnen Sensoren sind i.d.R. unterschiedlich getaktet, bedingt u.a. durch unterschiedliche Sensortotzeiten, so dass selbst bei zeitgleich getriggerten ersten Messungen die folgenden Messungen nicht mehr zeitgleich sind oder gewartet werden muss, bis die einzelnen Taktungen wieder einen gleichen Messzeitpunkt ermöglichen, wodurch Leerlaufzeiten einzelner Sensoren entstehen. Eine Näherungslösung besteht darin, dass man sich mit einer nur ungefähren Synchronität der einzelnen Sensorwerte zufrieden gibt und diejenigen Sensorwerte als einen zusammengehörigen Datensatz betrachtet, deren zeitlicher Abstand am geringsten ist bzw. einen zeitlichen Maximalabstand nicht überschreitet.

Eine andere Näherungslösung ergibt sich, indem aus erfassten Sensormesswerten genäherte Sensorwerte hinsichtlich eines gewünschten gemeinsamen Zeitpunkts extra- oder interpoliert werden.

Unter der Bezeichnung "Sensormesswert" bzw. "Messwert" wird hierbei ein erfasster Sensorwert verstanden, also ein Wert, der durch eine Messung des Sensors unmittelbar vorhanden ist. Der Erfassungszeitpunkt eines Messwerts ist derjenige Zeitpunkt, zu dem der Messwert tatsächlich gemessen wurde. Die Latenzzeit ist diejenige Zeitspanne, die ab diesem Zeitpunkt vergeht bis zum Zeitpunkt, an dem dieser Messwert verfügbar ist.

Im Gegensatz zu einem Messwert steht ein extra- oder interpolierter Sensorwert. Damit wird ein Wert bezeichnet, der aus Messwerten berechnet worden ist. Die Berechnung erfolgt anhand einer Extrapolationsvorschrift für einen vorzugebenden Wert der Zeitvariablen. Der Begriff "Extrapolationszeitpunkt" meint solch einen vorgegebenen Zeitwert.

Die Bezeichnung "Sensorwert" wird als Überbegriff verstanden, der verwendet wird, wenn eine Einschränkung auf eine der beiden Möglichkeiten nicht erforderlich ist. Entsprechend umfasst der Begriff "Aufnahmezeitpunkt" sowohl einen Erfassungszeitpunkt als auch einen Extrapolationszeitpunkt.

Mit Extra- oder Interpolation für vorgegebene Zeitwerte lassen sich durch entsprechende Zeitgeber Sensorwerte mit konstantem Zeitabstand bereitstellen, nicht aber Sensorwerte mit äquidistantem Abstand.

Erwünscht sind solche äquidistanten Sensorwerte beispielsweise bei der Erfassung von Oberflächen. Dazu werden häufig Verfahren verwendet, welche die Topographie einer Struktur, wie z.B. eines Bauwerks, sequentiell abtasten und dabei aufnehmen, wodurch eine 3D-Punktewolke entsteht. Ein gängiger Ansatz ist das Abtasten mittels eines Laserscanners. Ein solcher besteht aus einem Laserdistanzmesser und einer Vorrichtung, ausgeprägt meist als zwei Winkelsensoren, zur fortlaufenden Ausrichtung des Laserdistanzmessers bzw. des Laserstrahls, welche durch Drehen um zwei Achsen erfolgt, und Erfassung der beiden Richtungswinkel. Die Position eines Oberflächenpunktes wird demgemäss i.d.R. in Kugelkoordinatenform bestimmt, indem zum einen die beiden Ausrichtungswinkel relativ zu den beiden Drehachsen gemessen werden und zum anderen mittels des Laserstrahls die Entfernung zum angezielten Oberflächenpunkt gemessen wird.

Hier bereiten die weiter oben bereits erwähnten Zeitverzögerungen Schwierigkeiten, insbesondere solche, die durch die Latenzzeit des Winkelsensors hervorgerufen werden, welche bei einem Winkelsensor des Stands der Technik bspw. 600ns betragen kann. Eine Entfernungsmessung zu einem bestimmten Winkel kann erst zu einem um wenigstens diese Zeitspanne versetzten Zeitpunkt getriggert werden, zu welchem sich die Ausrichtung jedoch bereits geändert hat, also nicht mehr dem bestimmten Winkel entspricht. Distanz und Winkel beziehen sich infolgedessen nicht auf den genau gleichen Oberflächenpunkt. Eine etwaige nachgeschaltete Interpolation eines Distanzwertes auf den passenden Ausrichtungszeitpunkt ist mit Nachteilen verbunden, da zwischen zwei Distanzwerten nicht abschätzbare Diskontinuitäten vorliegen können, bedingt durch nicht gleichmässige Oberflächenverläufe.

Um ein regelmässiges Punkteraster zu erstellen, ist es bei Scannern des Stands der Technik demzufolge wichtig, dass die Entfernungen bereits bei der Aufnahme unter äquidistanten Winkelintervallen für beide Richtungswinkel erfasst werden. In der Regel sind die Rotationsgeschwindigkeiten um die beiden Drehachsen nicht gleich gross, sondern die Winkelgeschwindigkeit in eine Richtung ist erheblich grösser als die andere, damit ein zeilenweises Abtasten möglich ist.

Da nach dem Stand der Technik ein äquidistantes Messen der Winkelsensorwerte über konstante Messfrequenz bei gleich bleibender Drehgeschwindigkeit zu erreichen versucht wird, sind die Herausforderungen an die Gleichförmigkeit der Rotation um die schnelle Drehachse entsprechend gross. Einen solch exakten Gleichlauf zu gewährleisten, stellt hohe Anforderungen an die systematische Genauigkeit des entsprechenden Winkelsensors.

Eine Option der Problembehebung im Bezug auf die Genauigkeit von Messungen ist Extrapolation. In der WO 2010/139964 A2 wird ein Verfahren zum Betrieb eines Positionsencoders geoffenbart, mit dem sich zufällige Ungenauigkeiten einer Einzelmessung erkennen lassen. Aus mindestens einem Positionsmesswert wird ein Positionswert so extrapoliert, dass er zum gleichen Zeitpunkt gehört wie ein aktuell gemessener Positionswert. Ein zufälliger Fehler bei der aktuellen Messung, bspw. ein falsch abgelesener Positionscode, verursacht eine auffallend grosse Diskrepanz zwischen beiden, wodurch die Messungenauigkeit bemerkbar ist. Der Positionsmesswert kann dann durch seine berechnete Entsprechung ersetzt werden, wodurch sich die Zuverlässigkeit einzelner Positionswerte erhöht.

Nachteilig an dem in der WO 2010/139964 A2 beschriebenen Verfahren ist, dass ein extrapolierter Positionswert direkt auf einen Messwert bezogen ist. Dadurch verringern sich nicht die Anforderungen an die systematische Genauigkeit des Positionssensors hinsichtlich der Bereitstellung von Sensorwerten mit Äquidistanz zueinander. Eine diesbezügliche Ungleichmässigkeit bei den erfassten Messwerten wird auf die berechneten Werte übertragen. Zudem ist nachteilig, dass durch diesen direkten Bezug die Bereitstellung von Sensorwerten nicht von der Sensortotzeit entkoppelt wird und dementsprechend keine Bereitstellung zusätzlicher Positionswerte stattfindet. Die US 2007/088775 A1 beschreibt ein Verfahren und ein System zur Bereitstellung von Daten bei Mastersensor und Slavesensor durch Berechnen mit einer Extrapolationsvorschrift.

Die Aufgabe der vorliegenden Erfindung besteht daher in der Bereitstellung eines verbesserten Sensorsynchronisationsverfahrens und eines verbesserten Sensormesssystems.

Eine weitere Aufgabe der vorliegenden Erfindung ist die Bereitstellung eines verbesserten Sensorsynchronisationsverfahrens, welches die Bereitstellung synchronisierter Sensorwerte in einem Messsystem aus mindestens zwei Sensoren ermöglicht.

Eine weitere Aufgabe der vorliegenden Erfindung ist die Bereitstellung eines verbesserten Sensorsynchronisationsverfahrens, derart, dass synchronisiert zu einem Sensorwert eines ersten Sensors, insbesondere einem Sensorsollwert, mindestens ein Sensorwert, insbesondere ein Sensormesswert, mindestens eines weiteren Sensors aufgenommen wird.

Eine weitere Aufgabe der vorliegenden Erfindung ist die Bereitstellung eines verbesserten Sensorsynchronisationsverfahrens, das eine synchronisierte Aufnahme von Sensorwerten von mindestens zwei Sensoren von der Latenzzeit des ersten Sensors entkoppelt.

Eine weitere Aufgabe der vorliegenden Erfindung ist die Bereitstellung eines verbesserten Sensorsynchronisationsverfahrens, das die innerhalb eines bestimmten Zeitraums maximal mögliche Anzahl bereitgestellter Sensorwerte eines ersten Sensors von der Totzeit des ersten Sensors entkoppelt.

Eine weitere Aufgabe der vorliegenden Erfindung ist die Bereitstellung eines verbesserten Sensorsynchronisationsverfahrens, das eine synchronisierte Erfassung von Sensormesswerten hinsichtlich äquidistanter Sensorwerte eines ersten Sensors ermöglicht.

Eine weitere Aufgabe der vorliegenden Erfindung ist die Bereitstellung eines verbesserten Sensorsynchronisationsverfahrens, das die Bereitstellung präziser Sensorwerte eines ersten Sensors, insbesondere äquidistanter Sensorwerte, und daraus abgeleiteter präziser Zeitpunkte bei geringeren Anforderungen an die Sensorgenauigkeit und Dauer von Sensortotzeit und Sensorlatenzzeit als bei Verfahren nach dem Stand der Technik ermöglicht oder bei gleichen Anforderungen an die Sensortechnik eine höhere Messleistung als bei Verfahren nach dem Stand der Technik ermöglicht.

Eine weitere Aufgabe der vorliegenden Erfindung ist es, ein verbessertes Messsystem bereitzustellen, bestehend aus mindestens zwei Sensoren, das zu, insbesondere äquidistanten, Sollwerten des ersten Sensors synchronisiert Sensorwerte mindestens des zweiten Sensors erfasst.

Eine spezielle Aufgabe der vorliegenden Erfindung ist es, einen verbesserten Laserscanner bereitzustellen, der die Erstellung einer regelmässigen 3D-Punktwolke bei geringeren Anforderungen an die Sensortechnik als nach dem Stand der Technik ermöglicht oder eine höhere Messleistung bei gleichen Anforderungen an die Sensortechnik nach dem Stand der Technik ermöglicht.

Diese Aufgaben werden erfindungsgemäss durch die Merkmale der Ansprüche 1 oder 13 bzw. durch die Merkmale der abhängigen Ansprüche gelöst bzw. die Lösungen fortgebildet.

Die Erfindung betrifft ein Synchronisationsverfahren für mindestens zwei Sensoren. Hierbei fungiert der erste Sensor erfindungsgemäss als Mastersensor, dessen Messwertaufnahme unabhängig von den anderen Sensoren abläuft. Der zweite Sensor und ggf. weitere Sensoren fungieren als Slavesensoren, die zu Mastersensorwerten eigene Sensorwerte synchronisiert aufnehmen. Hierzu wird je ein Synchronisationssignal an solch einen abhängigen Sensor gesendet zu einem aus einem Mastersensorwert abgeleiteten Synchronisationszeitpunkt.

Bevorzugt sind mindestens bei einem Slavesensor die Sensorwerte synchronisiert erfasste Messwerte, wovon im Weiteren ausgegangen wird. Gleichwohl können erfindungsgemäss die aufgenommenen Slavesensorwerte auch aus Messwerten z.B. durch Extrapolation abgeleitete Daten sein, wenn dies die Messsituation gestattet.

Das Ableiten eines Synchronisationszeitpunktes erfolgt erfindungsgemäss durch Extrapolation aus einem ersten Zeit-Messwert-Paar und mindestens einem zweiten Zeit-Messwert-Paar des Mastersensors. Hierfür werden diese Messdaten benutzt, um eine hinterlegte Extrapolationsvorschrift zu konkretisieren, d.h. Parameterwerte zu berechnen, z.B. die beiden Parameterwerte bei linearer Extrapolation oder mehrere Parameterwerte für Extrapolation mit linearer Ausgleichsrechnung oder für quadratische oder sonstige nicht-lineare Extrapolation. Anschliessend wird ein Mastersensorsollwert vorgegeben, zu dem eine Aufnahme von Slavesensorwerten synchronisiert erfolgen soll und anhand der konkreten Extrapolationsvorschrift der Zeitpunkt extrapoliert, der zu diesem Sollwert zugehörig ist.

Mastersensorwerte, zu denen eine synchronisierte Aufnahme erfolgen soll, sind beliebig vorgebbar. Insbesondere können Sollwerte so gewählt werden, dass sie untereinander exakt äquidistanten Abstand haben. Da es sich insbesondere um ein prädiktives Synchronisationsverfahren handelt, das nicht schon vorhandene Sensorwerte durch Post-Processing synchronisiert, sondern ein zukünftiges synchronisiertes Erfassen von Sensorwerten ermöglicht, wird ein Sollwert derart gewählt, dass der zugehörige Zeitpunkt in der Zukunft liegt.

Beim Erreichen dieses Synchronisationszeitpunkts wird nun ein Synchronisationssignal an den Slavesensor gesendet. Das von einem solchen unselbständig aufnehmenden Sensor registrierte Synchronisationssignal triggert ein Erfassen eines Slavesensormesswertes. Dieser Slavesensormesswert wird nun mit dem zugehörigen Mastersensorsollwert als zusammengehöriges Wertetupel bereitgestellt. Es ist erfindungsgemäss nicht erforderlich, Zeitpunktsdaten, seien es Aufnahmezeitpunkte oder extrapolierte Zeitpunkte, bereitzustellen, vorzugsweise werden diese jedoch dem Datensatz beigefügt.

Dem Erfassen eines Mastersensormesswertes kann erfindungsgemäss das Auslesen eines maschinenlesbaren Codes zugrunde liegen. Insbesondere werden hierunter inkrementale oder absolute Positionscodes eines Positionssensors verstanden.

Als Extrapolationsvorschrift können ein oder mehrere Algorithmen hinterlegt sein, die den zeitlichen Verlauf der Messwerte des Mastersensors abschätzbar machen. Kann bspw. davon ausgegangen werden, dass sich während eines Messvorgangs sich die Messwerte im Lauf der Zeit im Wesentlichen mit gleich bleibender Geschwindigkeit ändern, kann eine lineare Extrapolationsvorschrift zugrunde gelegt werden. Es können auch Zustandsschätzer wie z.B. ein Kalmanfilter verwendet werden. Dementsprechend kann in die Berechnung offener Parameterwerte zusätzlich zu den erfassten Zeit-Messwert-Paaren der Wert wenigstens einer weiteren den Zustand des Mastersensors beschreibenden Mess- oder Regelgrösse einfliessen, z.B. der Wert eines Ansteuersignals eines Mastersensormotors. Für verschiedene Messphasen können zudem unterschiedliche Algorithmen angewandt werden. Beispielsweise kann für eine Beschleunigungsphase quadratische und für eine Phase gleichförmiger Änderung lineare Extrapolation oder entsprechende Modelle für ein Kalmanfilter benutzt werden. Auch lässt sich mit entsprechender Modellierung z.B. ein bekannt sprunghaftes Änderungsverhalten von Sensorwerten vorbilden.

Bei mehreren hinterlegten Algorithmen kann zudem ein durch eine Fehlerabfrage ausgelöstes automatisches Umschalten zwischen diesen stattfinden. Dazu wird während der laufenden Messung ein extrapolierter Sensorwert mit zum gleichen oder zumindest annähernd gleichen Zeitpunkt gehörenden Messwert verglichen, sobald dieser nach Ablauf der Latenzzeit vorliegt. Eine Fehlerroutine kann dann bei Abweichungen, deren Anzahl und/oder Grösse ein bestimmtes Mass überschreiten, die Verwendung eines adäquateren Algorithmus veranlassen.

Ein Vorteil des erfindungsgemässen Verfahrens liegt darin, dass die Bereitstellung von Mastersensorwerten und damit die synchronisierte Messwerterfassung von der Latenzzeit des Mastersensors entkoppelt werden.

Aufgrund des Extrapolierens wird das zu einem Mastersensorwert gehörige Synchronisationssignal zu dem Zeitpunkt bereitgestellt, an dem der Mastersensor diesen Wert nach oben beschriebener Abschätzung hat, und nicht erst zu einem latenzzeitbedingten Zeitpunkt, an dem der Mastersensor durch das fortlaufende Messen bereits einen anderen Wert hat. Bei einer direkten Abhängigkeit von einem Sensormesswert kann ein Synchronisationssignal immer erst um die Latenzzeit verzögert gesendet werden, also erst dann, wenn der Messwert verfügbar ist und nicht bereits zum Zeitpunkt seiner Erfassung.

Die Dauer der Latenzzeit und auch deren Regelhaftigkeit sind für das erfindungsgemässe Verfahren nicht mehr massgebend. Die Latenzzeit kommt lediglich dadurch zum Tragen, dass die konkrete Extrapolationsvorschrift erst dann gebildet werden kann, nachdem das zweite oder letzte zur Vorschriftsbildung notwendige Zeit-Wert-Paar erfasst wurde. Es kann also lediglich zu Beginn des Messens nach erfindungsgemässen Verfahren eine Zeitspanne entstehen, in der keine Sollwertzeitpunkte bereitgestellt werden können.

Ein weiterer, ähnlich gelagerter Vorteil des erfindungsgemässen Verfahrens liegt darin, dass durch den Bezug auf eine Extrapolationsvorschrift die Totzeit des Mastersensors keinen begrenzenden Faktor mehr darstellt für die pro Zeiteinheit maximal mögliche Anzahl bereitgestellter Mastersensorwerte und damit für die pro Zeiteinheit maximal mögliche Anzahl an Synchronisationszeitpunkten.

Folglich können verglichen mit dem Stand der Technik längere Latenz- und Totzeiten akzeptiert werden oder unveränderte Latenz- und Totzeiten für höhere Messraten des Messsystems genutzt werden.

Das erfindungsgemässe Synchronisationsverfahren bietet ausserdem den Vorteil, dass durch die Verwendung von Extrapolation Mastersensorsollwerte und Synchronisationszeitpunkte präzise bereitgestellt werden können, ohne vergleichsweise hohe Anforderungen an die Anstell- und Messgenauigkeit des Mastersensors stellen zu müssen.

Erfindungsgemäss wird bei fortlaufender Messung vorzugsweise die verwendete Extrapolationsvorschrift durch jedes neu gemessene Zeit-Messwert-Paar des Mastersensors erneut konkretisiert, d.h. die Parameterwerte neu berechnet, unabhängig davon, ob es sich um einen rekursiven Filter handelt oder nicht. Durch ein solches Aktualisieren wird gewährleistet, dass es im Lauf der Zeit nicht zu einer Drift zwischen geschätztem und tatsächlichem Verlauf der Sensorwerte kommt, selbst wenn der zeitliche Messwertverlauf nur eine wenig ausgeprägte Regelhaftigkeit aufweist.

Die Anforderungen an die Gleichförmigkeit der Messwertaufnahme des Mastersensors können durch das erfindungsgemässe Verfahren vergleichsweise gering gehalten werden, auch wenn eine Messwertaufnahme durch einen Slavesensor zu äquidistanten Sollwerten beabsichtigt ist. Durch das erfindungsgemässe Verfahren entstehen auch aus Mastersensormesswerten mit ungleichmässigem Abstand Synchronisationszeitpunkte, die zu präzis äquidistanten Sensorwerten gehören. Die Anforderungen an den Gleichlauf des taktgebenden Sensors können mithin vergleichsweise gering gehalten werden.

Zudem wirken sich durch diese Art der Mittelung einzelne zufällig fehlerhafte Messwerte des Mastersensors nicht so stark aus wie bei der direkten Verwendung von Messwertzeitpunkten als Synchronisationszeitpunkte.

Erfindungsgemäss wird der zusätzliche Vorteil verschafft, dass selbst eine zeitweilige Unterbrechung der Messwertbereitstellung des unabhängigen Sensors keinen Abbruch des Verfahrens erzwingt. Eine Unterbrechung kann bspw. bedingt sein durch Aussetzer bei der Messwerterfassung oder bei der Übermittlung erfasster Messwerte, zudem stellen z.B. manche Positionssensoren nach dem Stand der Technik keine Messwerte bereit, wenn die Position nicht verändert wird.

Kann bei einer Vermessung davon ausgegangen werden, dass zumindest zu Beginn der Verlauf der Sensorwerte des Mastersensors gleich oder zumindest ähnlich ist wie bei einer vorangegangenen Vermessung, ermöglicht das erfindungsgemässe Synchronisationsverfahren ein synchronisiertes Aufnehmen von Slavesensorwerten bereits vor der Verfügbarkeit eines neu aufgenommenen Zeit-Messwert-Paars, indem die konkrete Extrapolationsvorschrift der vorangegangenen Vermessung verwendet wird, solange bis eine Neuberechnung von Parameterwerten möglich ist. Eventuelle Abweichungen können nachgelagert anhand der dann vorliegenden Messwerte korrigiert werden. Somit kann auch der Beginn einer Vermessung von der Sensorlatenzzeit entkoppelt werden.

Mit dem erfindungsgemässen Verfahren kann es allerdings vorkommen, dass sich ein äquidistanter Abstand zwischen den Mastersensorsollwerten vereinzelt nicht einhalten lässt. Durch das Extrapolieren anhand einer aktualisierten Vorschrift, deren Parameterwerte sich aufgrund einer vergleichsweise grossen Unregelmässigkeit der zugrunde liegenden Messung erheblich von der vorhergehenden unterscheiden, kann der zum nächsten äquidistanten Sollwert gehörige Zeitpunkt bereits verflossen sein. Naturgemäss ist es dann nicht mehr möglich, zu diesem Zeitpunkt ein Synchronisationssignal auszusenden.

In Anbetracht einer solchen Situation kann erfindungsgemäss wahlweise
1. dieser Sollwert ausgelassen und als nächster Sollwert jener mit doppelter Distanz herangezogen werden,
2. als nächster Sollwert derjenige betrachtet werden, der zum nächstmöglichen Synchronisationssignal-Sendezeitpunkt gehörig ist, oder
3. bereits vor der Anwendung aktualisierter Parameter deren Abweichung zu den vorhergehenden bestimmt und bei Überschreiten eines festgelegten Schwellenwerts die Verwendung der neu berechneten Parameter blockiert werden und stattdessen die Extrapolation anhand der bereits vorliegenden Parameter weitergeführt werden. Hiermit kann der Einfluss einzelner Messausreisser unterbunden werden. Zusätzlich kann vorgesehen sein, dass nach mehrmaligem aufeinanderfolgenden Überschreiten entweder ein Blockieren nicht mehr stattfindet, da mehrmalige grosse Abweichungen auf einen neuen Grad an Messwertänderung hinweisen oder im Gegenteil ein Abbruch des Synchronisationsverfahrens eingeleitet werden, weil ein beständiger Fehler in der Messwerterfassung angenommen wird.

Erfindungsgemäss wird hierbei durch das Verfahren sichergestellt, dass zwischen den einzelnen extrapolierten Zeitpunkten und damit den einzelnen Synchronisationsignal-Sendezeitpunkten ein zeitlicher Mindestabstand eingehalten wird, um die einzelnen Datensätze sicher von einander unterscheidbar zu halten.

Erfindungsgemäss kann das Synchronisationssignal statt zu dem zu einem Mastersensorsollwert zugehörigen extrapolierten Zeitpunkt auch zu einem Zeitpunkt gesendet werden, der sich definiert von diesem unterscheidet und vorzugsweise vor diesem liegt. Ein solcher Verzögerungszeitpunkt kann insbesondere zur Berücksichtigung von Verzögerungen durch Signallaufzeiten dienen. Denn naturgemäss kann der Slavesensor zumindest wegen der Laufzeit des Synchronisationssignals einen Messwert nicht genau zum Sollwertzeitpunkt erfassen. Ist die Zeitdauer bekannt, die zwischen dem Ausssenden des Synchronisationssignals und dem Erfassen eines Slavesensormesswertes vergehen wird, kann als Zeitpunkt für das Aussenden des Synchronisationssignals derjenige Zeitpunkt gewählt werden, der sich um genau diese Zeitdauer vom extrapolierten Sollwertzeitpunkt unterscheidet. Voraussetzung ist, dass dieser Zeitpunkt bei Bereitstellung des Sollwertzeitpunkts nicht bereits verflossen ist.

Neben dem bisher beschriebenen Synchronisationssignal, im folgenden als erstes Synchronisationssignal bezeichnet, ist es erfindungsgemäss möglich, bei einer definierten Anzahl von ersten Synchronisationssignalen wenigstens ein weiteres, insbesondere ein zweites Synchronisationssignal zu senden. Die Anzahl kann für jedes Signal unterschiedlich definiert sein. Ein solches zweites Synchronisationssignal ermöglicht eine eindeutige Zuordnung von jedem erstem Synchronisationssignal und dem zugrunde liegenden Mastersensormesswert, wodurch die Zuverlässigkeit des Messsystems erhöht wird. Zudem kann mit unterschiedlich getakteten Synchronisationssignalen bei mehr als einem abhängigen Sensor diese unterschiedlich getriggert werden. Dies kann sinnvoll sein, wenn nicht zu jedem Mastersensorwert von allen Slavesensoren neu aufgenommene Sensorwerte erforderlich sind, bspw. weil sich diese innerhalb der Taktzeit des ersten Synchronisationssignal nicht oder kaum verändern. Zweckmässig kann dies auch für ein Messsystem mit Sensoren mit sehr unterschiedlicher Taktfrequenz sein.

Auch ist es erfindungsgemäss möglich, zusammengehörige Datensätze in einem Post-Processing zu korrigieren, um eine verbesserte Synchronität zu erhalten. Die als ein zusammengehöriges Tupel bereitgestellten Werte sind wegen oben bereits erwähnter Verzögerungszeiten, z.B. Laufzeiten des Triggersignals, nicht zu völlig gleichen Zeitpunkten aufgenommen worden. Deshalb können innerhalb eines Tupels alle Werte auf einen Zeitpunkt interpoliert werden. Als gemeinsamer Zeitpunkt kann prinzipiell der Aufnahmezeitpunkt eines jeden beteiligten Sensors dienen. Vorzugsweise wird erfindungsgemäss derjenige genommen, bei dem eine Interpolation wegen nicht abschätzbarer Werteverläufe nicht sinnvoll oder mit der grössten Unsicherheit behaftet ist, bspw. ist dies bei einem Laserscanner der Laserdistanzmesser. Die Werte der anderen Sensoren eines Tupels werden dann durch ihr interpoliertes Äquivalent ersetzt.

Bezogen auf den Mastersensor erfolgt die Berechnung anhand der für diesen Zeitpunkt während des Messvorgangs geltenden Extrapolationsvorschrift. Alternativ ist es möglich, da ja nach Ende des Messvorgangs alle Mastersensormesswerte erfasst vorliegen und die Latenzzeit keinerlei Kenntnisgrenzen mehr setzt, die Berechnung anhand der Extrapolationsvorschrift vorzunehmen, die diesem Zeitpunkt tatsächlich entspricht, die sich also aus den Messwerten ergibt, die zeitlich vor und nach dem Slavesensoraufnahmezeitpunkt liegen. In diesem Sinne ist die Bezeichnung "Interpolationsvorschrift" treffender.

Durch das Vorhandensein aller Mastersensormesswerte nach Ende des Messvorgangs ist es auch möglich, zumindest einzelne Mastersensorsollwerte durch einen Mastersensormesswert zu ersetzen, falls die jeweils zugehörigen Zeitpunkte gleich sind oder der zeitliche Unterschied sich innerhalb definierter Grenzen bewegt.

Zu beachten ist allerdings, dass eine Korrektur von Mastersensorwerten anhand unterschiedlicher Extra- bzw. Interpolationsvorschriften eine etwaig vorhandene Äquidistanz weitgehend zerstört, da gleiche Zeitdifferenzen je nach Extra- bzw. Interpolationsvorschrift unterschiedliche Wertedifferenzen ergeben. Erhalten lässt sich Äquidistanz, allerdings womöglich auf Kosten der Interpolationsgenauigkeit, indem nicht nur über zwei Zeit-Wert-Paare interpoliert wird, sondern eine einzige Interpolationsvorschrift anhand aller Sensormesswerte gebildet wird.

Das erfindungsgemässe Verfahren ist durch ein erfindungsgemässes Sensormesssystem bestehend aus einem Mastersensor mit Zeitgeber, beispielsweise einer internen Uhr, und mindestens einem Slavesensor realisierbar, wobei zwischen Master- und Slavesensor eine Kommunikationsverbindung besteht, über die der Mastersensor das wenigstens eine Synchronisationssignal an den Slavesensor senden kann. Das Messsystem weist weiterhin eine Speichereinheit auf zum Bereitstellen der zusammengehörigen Datensätze.

Erfindungsgemäss weist das Sensormesssystem insbesondere eine Steuer- und Auswerteeinheit auf, die geeignet ist, Synchronisationssignale, Sensorwerte und Daten von Zeitpunkten zu empfangen, bereitzustellen, zu senden und auszuwerten. Hierunter sind insbesondere auch die zu Sensorwerten gehörigen Aufnahmezeitpunkte zu verstehen, so dass die Steuer- und Auswerteeinheit Verzögerungszeiten zwischen zusammengehörigen Sensorwerten der einzelnen Sensoren ermitteln und bereitstellen kann, vor allem in Hinsicht auf ein Post-Processing. Hierzu können die einzelnen Systemkomponenten mit synchronisierten Uhren versehen sein, so dass die Sensoren ihre Werte mit einem Zeitstempel versehen an die Steuer- und Auswerteeinheit senden. Alternativ ist es auch möglich, Sensorwerte beim Erfassen durch die Steuer- und Auswerteeinheit mit einem internen Zeitstempel zu versehen.

Ist eine solche Steuer- und Auswerteeinheit vorhanden, kann die Kommunikation zwischen Master- und Slavesensor über diese verlaufen, also auf eine direkte Datenverbindung zwischen Master- und Slavesensor verzichtet werden.

Das erfindungsgemässe Synchronisationsverfahren sowie das erfindungsgemässe Sensormesssystem werden nachfolgend anhand von in der Zeichnung schematisch dargestellten Ausführungsbeispielen rein beispielhaft näher beschrieben.

Im Einzelnen zeigen
- Fig.1a-d: die Prinzipdarstellung des Erzeugens von Synchronisationssignalen nach dem erfindungsgemässen Synchronisationsverfahren,
- Fig.2: die Prinzipdarstellung der erfindungsgemässen synchronisierten Messwerterfassung und - bereitstellung,
- Fig.3a-d: die Prinzipdarstellung des erfindungsgemässen Bereitstellen einer aktualisierten Extrapolationsvorschrift,
- Fig.4: einen Ausschnitt des erfindungsgemässen Verfahrensablaufs hinsichtlich Erzeugung des ersten und des zweiten Synchronisationssignals,
- Fig.5a-d: Wertespeicherschemata für einen Ausschnitt eines erfindungsgemässen Messvorgangs mit einem Messsystem aus Mastersensor und einem Slavesensor und Prinzip einer Synchronitätsverbesserung durch Post-Processing,
- Fig.6a-c: eine Zeichnung eines erfindungsgemässen Sensorsmesssystems, ausgeprägt als Laserscanner, und grafische Darstellung des Messergebnisses und
- Fig.7a-b: die Prinzipdarstellung eines erfindungsgemässen Messvorgangs mit erfindungsgemässem Laserscanner und Ausschnitt eines daraus resultierenden Sensorwertespeicherschemas.

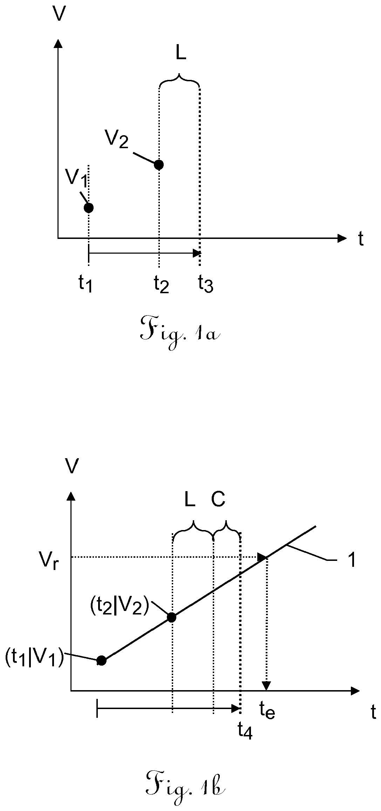

Fig.1a-d zeigt den prinzipiellen Verlauf des Erzeugens von Synchronisationssignalen nach dem erfindungsgemässen Synchronisationsverfahren, beginnend bei Fig. 1a. Der Mastersensor misst ab einem Startzeitpunkt Sensorwerte V, zu einem Zeitpunkt V₁ und zu einem späteren Zeitpunkt V₂. Bis zum betrachteten Zeitpunkt t₃ ist Messwert V₁ verfügbar, und zum Zeitpunkt t₃ wird Messwert V₂ verfügbar. Die Zeit, die von der Erfassung von V₂ bis zu dessen Verfügbarkeit vergangen ist, entspricht der Latenzzeit L des Mastersensors.

Wie in Fig. 1b dargestellt, werden nun aus den vorliegenden beiden Zeit-Messwert-Paaren (t₁|V₁) und (t₂|V₂) die Parameterwerte der hinterlegten Extrapolationsvorschrift berechnet und bereitgestellt. Im Beispiel wird ein linearer Algorithmus verwendet. Ist ein anderer Algorithmus zweckmässiger, der bspw. auf einem Polynom höheren Grads basiert, werden für eine Parameterwertkalkulation noch mehr Zeit-Messwert-Paare erfasst und verwendet. Auch ist erfindungsgemäss der Wert wenigstens eines weiteren Zustandsignals des Mastersensors, bspw. der Wert eines Ansteuersignals eines Sensormotors, zur Konkretisierung einer entsprechenden Extrapolationsvorschrift, z.B. eines Estimators, zusätzlich verwendbar. Anhand der dann vorliegenden konkreten Extrapolationsvorschrift 1 wird ein Zeitpunkt tₑ extrapoliert, zu dem der Mastersensor nach dieser Abschätzung einen vorgegebenen Mastersensorsollwert Vᵣ messen wird bzw. würde. Die Zeitdauer C, die vom Erfassen von V₂ bis zur Bereitstellung von tₑ verstreicht, ergibt den Zeitpunkt t₄.

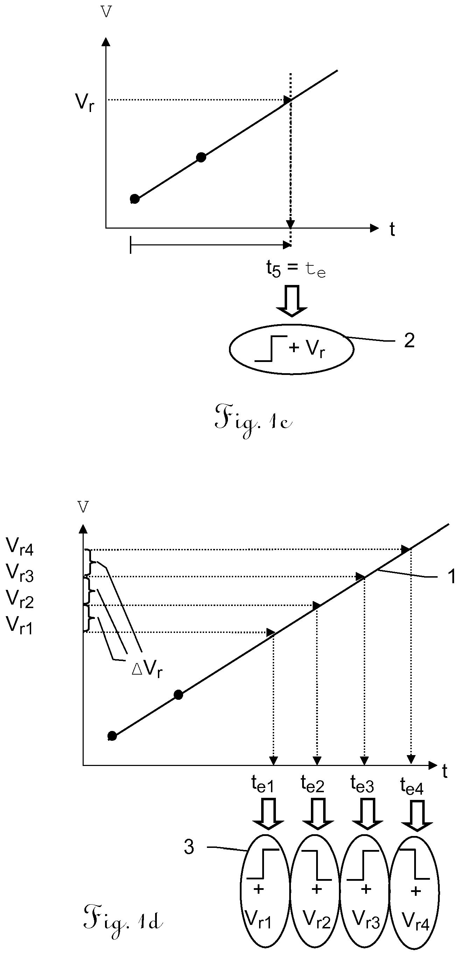

Fig. 1c stellt den Vorgang zu einem folgenden Zeitpunkt t₅ dar, der dem extrapolierten Zeitpunkt tₑ entspricht. Da dieser Zeitpunkt tₑ nun erreicht ist, an dem der Mastersensor den gewünschten Sollwert geschätzt erreicht hat, wird ein erstes Synchronisationssignal, hier und im Folgenden dargestellt als aufsteigende oder absteigende Stufe, zusammen mit dem zugrunde liegenden Sollwert Vᵣ, beispielsweise als gemeinsames Datenpaket 2, gesendet.

Fig. 1d zeigt das Prinzip des Synchronisationsverfahrens für mehrere vorgegebene Mastersensorsollwerte. Zu den vorgegebenen Mastersensorsollwerten Vᵣ₁ (entspricht Vᵣ aus Fig. 1c), Vᵣ₂, Vᵣ₃, Vᵣ₄ werden anhand der Extrapolationsvorschrift 1 die zugehörigen Zeitpunkte tₑ₁ (entspricht tₑ aus Fig. 1C), tₑ₂, tₑ₃, tₑ₄ extrapoliert. Hierbei haben die Sollwerte äquidistanten Abstand ΔVᵣ. Bei Eintreffen der jeweiligen extrapolierten Zeitpunkte wird jeweils ein Datenpaket 3 aus erstem Synchronisationssignal und zugrunde liegendem Sollwert gesendet.

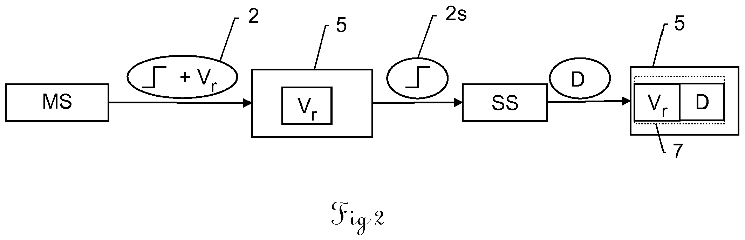

Fig. 2 stellt das Prinzip der synchronisierten Messwerterfassung nach dem erfindungsgemässen Synchronisationsverfahren dar. Das Datenpaket 2 aus erstem Synchronisationssignal und zugrunde liegendem Mastersensorsollwert wird vom Mastersensor MS an eine Speichereinheit 5 gesendet. Die Speichereinheit 5 speichert den Sollwert Vᵣ und leitet das erste Synchronisationssignal 2s an den Slavessensor SS weiter. Das erste Synchronisationssignal triggert beim Slavesensor SS das Aufnehmen eines Slavesensormesswertes D. Dieser wird nach dem Erfassen an die Speichereinheit 5 übermittelt, wo Slavesensormesswert D und Mastersensorsollwert Vᵣ als zusammengehöriger Wertetupel 7 bereitgestellt werden.

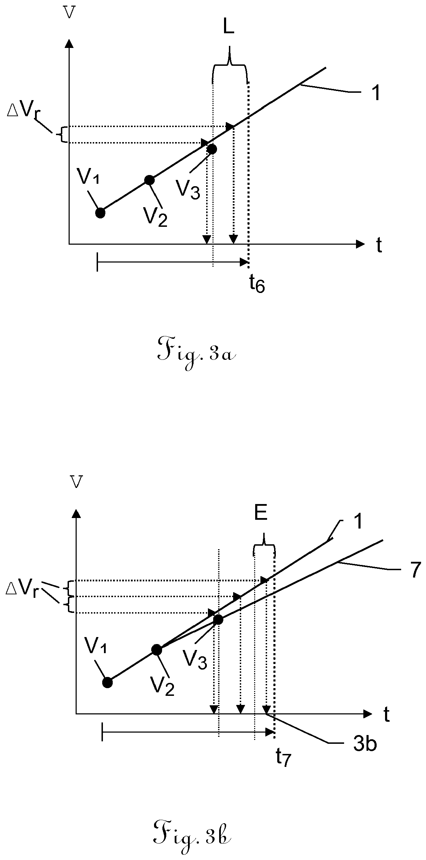

Fig. 3a-d zeigen, wie prinzipiell nach erfindungsgemässen Synchronisationsverfahren aus den jeweils aktuellsten Mastersensormesswerten aktualisierte Extrapolationsvorschriften gebildet werden.

Fig. 3a zeigt einen Zeitpunkt t₆, zu dem eine Extrapolationsvorschrift 1 aus den Zeit-Messwert-Paaren zu den Messwerten V₁ und V₂ bereits vollständig bestimmt ist und anhand derer zu vorgegebenen Sollwerten Zeitpunkte extrapoliert werden (horizontale und vertikale Pfeile). Der Messpunkt V₃ ist zum Zeitpunkt t₆ verfügbar geworden, da seit seiner Erfassung genau die Latenzzeit L vergangen ist. Zu einem späteren Zeitpunkt t₇, dargestellt in Fig. 3b, ist aus den Zeit-Messwert-Paaren zu den Messwerten V₃ und V₂ eine neu konkretisierte Extrapolationsvorschrift 7 bereitgestellt worden. E bezeichnet die dafür notwendige Zeitdauer, die seit dem Erfassen von V₃ verstrichen ist. Innerhalb dieser Zeitdauer wurde zu einem vorgegebenen Sollwert weiterhin nach der vorliegenden Extrapolationsvorschrift 1 ein Zeitpunkt 3b extrapoliert. In diesem Beispiel weisen die Sollwerte dabei äquidistanten Abstand ΔVᵣ auf.

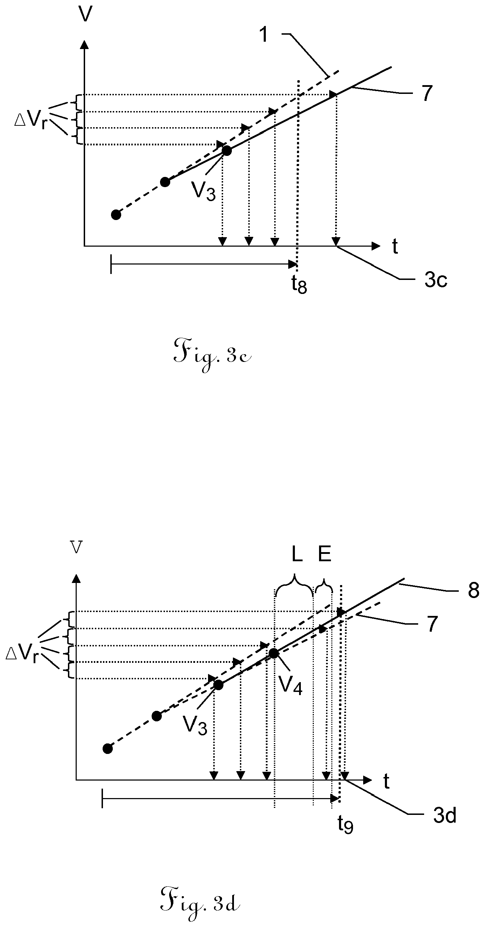

Fig. 3c zeigt einen späteren Zeitpunkt t₈, zu dem die aktualisierte Extrapolationsvorschrift 7 zum Berechnen von Synchronisationszeitpunkten bereitsteht. Deshalb wird zu einem Sollwert nun nicht mehr nach der vorherigen Extrapolationsvorschrift 1 extrapoliert, sondern nach der aktualisierten Extrapolationsvorschrift 7. Da die Sensormesswerte keine exakte Regelhaftigkeit aufweisen, ergeben sich leicht unterschiedliche Parameterwerte. Deshalb weist der zuletzt extrapolierte zukünftige Zeitpunkt 3c nicht den gleichen zeitlichen Abstand zu den vorher extrapolierten Zeitpunkten auf wie diese untereinander, obwohl alle zu Sollwerten mit äquidistantem Abstand ΔVᵣ gehörig sind. Dies Beispiel verdeutlicht den Vorteil des erfindungsgemässen Synchronisationsverfahren, dass auch bei relativ geringer Genauigkeit des Mastersensors, die sich in einer nicht exakten Regelmässigkeit ausdrückt, präzise, insbesondere äquidistante, Sensorwerte und daraus abgeleitete Zeitpunkte bereitgestellt werden können.

Fig. 3d illustriert die Situation zu einem späteren Zeitpunkt t₉. Seit der Erfassung eines vierten Messwerts V₄ ist bereits eine Zeitdauer grösser als die Latenzzeit L vergangen, weswegen der vierte Messwert V₄ verfügbar ist, und die Zeitdauer E zur Aktualisierung einer Extrapolationsvorschrift, weswegen aus dem entsprechenden Zeit-Messwert-Paar eine neu konkretisierte Extrapolationsvorschrift 8 bereitgestellt ist. Zu einem vorgegebenen Sollwert wird anhand der aktuellen Extrapolationsvorschrift 8 ein zukünftiger Zeitpunkt 3d extrapoliert, die veraltete Extrapolationsvorschrift 7 wird nicht mehr herangezogen.

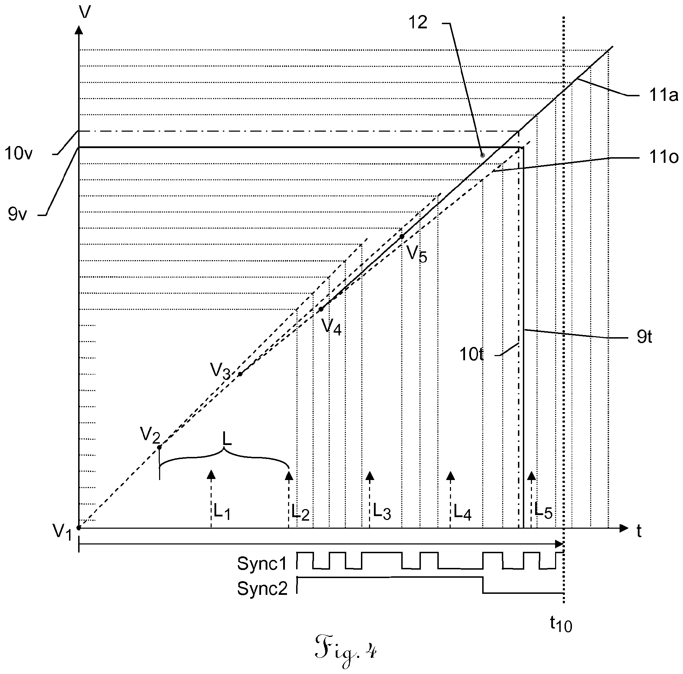

Fig. 4 zeigt graphisch einen Verlauf des erfindungsgemässen Synchronisationsverfahrens hinsichtlich Zeitpunktsextrapolation und Bereitstellung von erstem Synchronisationssignal Sync1 und zweitem Synchronisationssignal Sync2, zu einem beliebigen Zeitpunkt t₁₀, wobei auch bereits vergangene Abläufe beispielhaft festgehalten sind. Die Mastersensormesswerte V₁ bis V₅ sind erfasst und, zeitversetzt um die Latenzzeit L, zu den Zeitpunkten L₁ bis L₅ verfügbar. Ein Messwert 12 ist bislang nur erfasst, steht aber noch nicht für Berechnungen zur Verfügung.

Mit den zu V₁ bis V₄ gehörigen Zeit-Messwert-Paaren waren Parameterwerte der hinterlegten Extrapolationsvorschrift berechnet worden, die zum betrachteten Zeitpunkt t₁₀ keine Verwendung mehr finden, weshalb die entsprechenden Extrapolationsgeraden gestrichelt gezeichnet sind, z.B. Extrapolationsgerade 110. Die aktuell gültige Extrapolationsvorschrift 11a basiert auf den Zeit-Messwert-Paaren zu den Messwerten V₅ und V₄.

Die gepunkteten horizontalen und daran anschliessenden vertikalen Linien und die Linien 9v und 9t, 10v und 10t stellen die Extrapolation von Zeitpunkten zu vorgegebenen, äquidistanten Mastersensorsollwerten anhand der einzelnen Extrapolationsvorschriften dar.

Beim Eintreffen dieser extrapolierten Zeitpunkte wurde jeweils ein erstes Synchronisationssignal Sync 1 gesendet. Zusätzlich wurde ein zweites Synchronisationssignal Sync2 zu Beginn mit dem ersten der ersten Synchronisationssignale gesendet und nach einer bestimmten Anzahl von ersten Synchronisationssignalen, in diesem Beispiel nach dem achten.

Mit den aktuellen Parameterwerten wird eine deutlich höhere Messwertaufnahmegeschwindigkeit geschätzt als mit den veralteten Werten, was sich in Fig. 4 in einer grösseren Steigung der Extrapolationsgeraden 11a im Vergleich zur Geraden 110 ausdrückt. Betrachtet werden die Extrapolationen zu den beiden Sollwerten 9v und 10v, die den gleichen Abstand zueinander haben wie die restlichen Sollwerte. In diesem Beispiel ergibt sich nun aufgrund der unterschiedlichen konkreten Algorithmen, dass der zum Sollwert 10v gehörige Zeitpunkt 10t, der der erste anhand der aktuellen Extrapolationsvorschrift errechnete Zeitpunkt ist, vor dem Zeitpunkt 9t liegt, der zum Sollwert 9v gehörig ist, obwohl Sollwert 10v "grösser" als Sollwert 9v ist. Zudem ist der Zeitpunkt 10t bereits vergangen, da das Bereitstellen des aktuellen Algorithmus erst nach dem Zeitpunkt L₅ stattfand. Deshalb wird zum Zeitpunkt 10t kein Synchronisationssignal Sync1 gesendet, und zum Sollwert 10v kein Slavesensormesswert erfasst. Die Äquidistanz zwischen den Sollwerten ist an dieser Stelle nicht einzuhalten, wird aber dadurch fortgesetzt, dass der nächste zur Synchronisation verwendete Sollwert äquidistanten Abstand zum nicht verwendeten Sollwert 10v besitzt. Um die Zahl der Flanken im Synchronisationssignal Sync1 konsistent zu halten, kann es auch vorteilhaft sein, die fehlende Flanke so schnell als möglich nachzuholen.

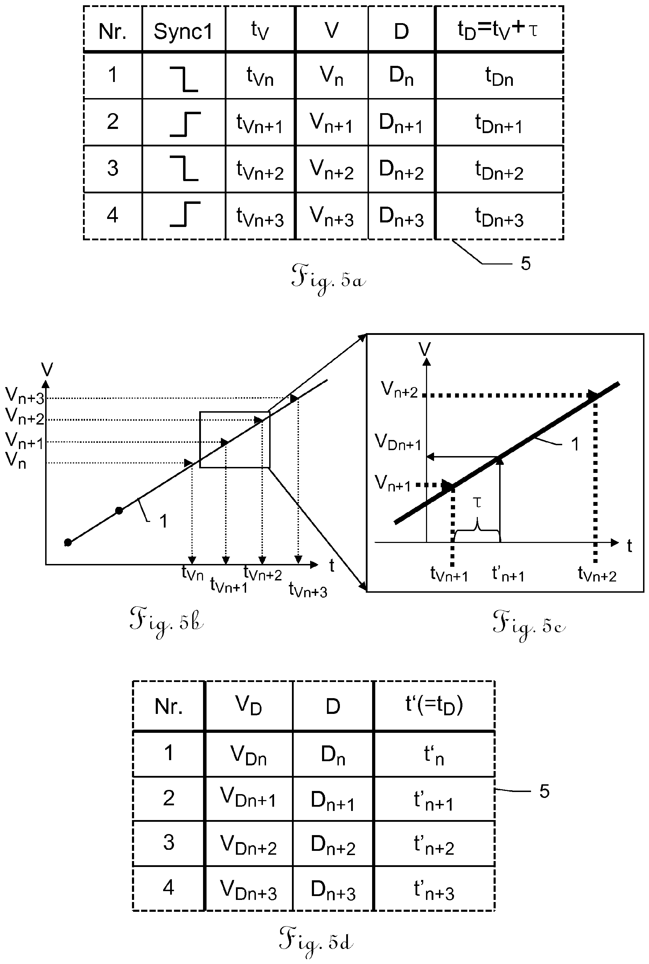

Fig. 5a zeigt für ein erfindungsgemässes Messsystem aus einem Mastersensor und einem Slavesensor schematisch das Bereitstellen von Sensorwerten. Eine Speichereinheit 5 empfängt und speichert die vom Mastersensor gesendeten Synchronisationssignale Sync1, die zugrunde liegenden Mastersensorwerte V und die zugehörigen Zeitpunkte t_{V} zusammengehörig, schematisch dargestellt als eine zusammengehörige Zeile. Statt den Zeitpunkt vom Mastersensor zu empfangen, kann alternativ einem Synchronisationssignal und Mastersensorwert auch ein Zeitstempel von der Speichereinheit aufgeprägt werden. Erfindungsgemäss müssen Zeitpunkte nicht gespeichert werden, erforderlich ist lediglich, dass zu einem synchronisierten Zeitpunkt gehörige Werte von Mastersensor und Slavesensor zusammengehörig bereitgestellt werden. Im Beispiel sind Mastersensorwerte V und Slavesensorwerte D jeweils zusammengehörig, z.B. Vₙ und Dₙ.

Die zu einem Mastersensorwert V gehörigen Slavesensorwerte D sind aufgrund von Signallauf- und Latenzzeiten jeweils um eine Zeitspanne τ zu den Zeitpunkten t_{V} zeitversetzt erfasst worden, also zu einem Zeitpunkt t_{D}=t_{V}+τ. In einer vorteilhaften Ausgestaltung kann deshalb anstelle eines Mastersensorwerts V oder zusätzlich dazu ein im Nachhinein interpolierter Wert gespeichert werden. Dadurch wird die Extrapolationsgenauigkeit überwacht und es können Korrekturen im Post-Processing gemacht werden.

Fig. 5b-d stellen eine solche erfindungsgemässe Möglichkeit dar, den Zeitversatz um eine Zeitspanne τ von synchronisierten Mastersensorwerten V und Slavesensorwerte D zu korrigieren. Betrachtet wird der Datensatz aus Slavesensorwert Dₙ₊₁ und Mastersensorwert Vₙ₊₁.

Wie aus Fig. 5b und 5c ersichtlich, gehört zum Mastersensorwert Vₙ₊₁ der Zeitpunkt t_{Vn+1}, Dₙ₊₁ wurde um die Zeitspanne τ versetzt hierzu zu einem Zeitpunkt t_{'n+1} (entspricht t_{Dn+1} aus Fig.5a) aufgenommen. Vₙ₊₁ soll nun durch einen Mastersensorwert V_{Dn+1} ersetzt werden, der geschätzt zum Zeitpunkt t'ₙ₊₁ vorlag. Hierzu wird anhand der zugehörigen Extrapolationsvorschrift 1 extrapoliert, wie durch den vertikalen Pfeil und anschliessenden horizontalen Pfeil in Fig. 5c angedeutet. Durch das anschliessende Ersetzen bilden nun V_{Dn+1} und Dₙ₊₁ ein zusammengehöriges Tupel. Dies wird gleicher Weise für die weiteren Mastersensorwerte V_{Dn,} V_{Dn+2} und V_{Dn+3} durchgeführt. So ergeben sich die in Fig. 5d gezeigten zusammengehörigen Wertetupel, die jeweils Sensorwerte beinhalten, die beide zum jeweiligen Zeitpunkt t' vorlagen, die Slavesensorwerte D als Messwerte, die Mastersensorwerte V_{D} als interpolierte Werte.

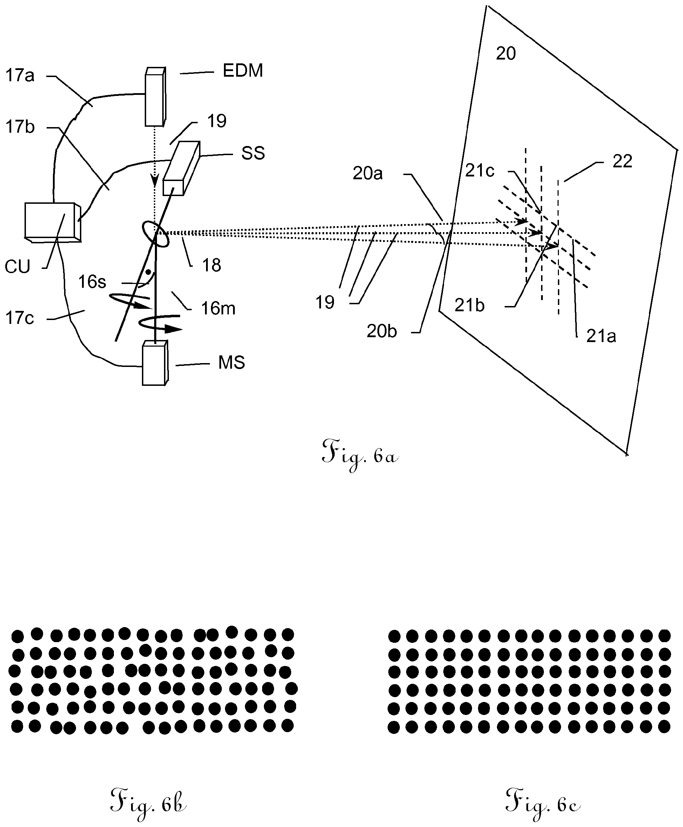

Fig. 6a stellt in einer schematischen Schrägansicht ein erfindungsgemässes Sensormesssystem aus einem Mastersensor und zwei Slavesensoren am Beispiel eines erfindungsgemässen Laserscanners dar.

Ein Laserdistanzmesser EDM sendet einen Laserstrahl 19 aus. Dieser wird über einen Umlenkspiegel 18 auf die Oberfläche 20 eines zu vermessenden Objekts geführt. Von dort reflektiertes Licht wird vom Laserdistanzmesser aufgenommen und über eine Laufzeitmessung oder Phasenvergleichsmessung die jeweilige Distanz zwischen Laserscanner und jeweiligem Oberflächenpunkt bestimmt. Um ein Raster von Oberflächenpunkten aufzunehmen, wird der Umlenkspiegel 18 um zwei senkrecht zueinander stehende Achsen 16m und 16s gedreht. Die Drehung wird von zwei Winkelsensoren MS und SS ausgeführt und der jeweilige Ausrichtungswinkel von diesen gemessen. Im Beispiel dreht der Winkelsensor MS um die schnell laufende vertikale Achse 16m, der Winkelsensor SS um die schrittweise langsam laufende horizontale Achse 16s. Die Winkeländerungen erfolgen in beide Richtungen äquidistant, so dass zeilenweise ein gleichmässiges Punkteraster 22 entsteht. Beispielhaft sind drei Oberflächenpunkte 21a, 21b, 21c dargestellt, die nacheinander durch den Laserstrahl 19 angesteuert und vermessen werden. Durch die äquidistante Winkeländerung 20a und 20b haben diese näherungsweise äquidistanten Abstand in vertikaler Richtung.

Der Winkelsensor MS fungiert in der gezeigten Anordnung als erfindungsgemässer Mastersensor, der eine Messwerterfassung nach dem erfindungsgemässen Synchronisationsverfahren durch die beiden erfindungsgemässen Slavesensoren EDM und SS auslöst. Eine zentrale Steuer- und Auswerteeinheit CU, die mit den Sensoren EDM, MS und SS über Kommunikationskanäle 17a, 17b und 17c verbunden ist, sorgt hierbei für den notwendigen Signaltransfer und stellt Sensorwerte und Datensätze bereit.

Fig. 6b und Fig. 6c stellen einen Ausschnitt des durch einen Laserscanner gewonnen Punkterasters, wobei auf eine Darstellung von Entfernungsinformation verzichtet wurde. Fig. 6b zeigt ein ungleichmässiges Raster, wie es durch einen Laserscanner nach dem Stand der Technik entstehen kann. Die Abstände der einzelnen Punkte, die den vermessenen Oberflächenpunkten entsprechen, sind nicht durchgehend äquidistant. Durch den erfindungsgemässen Laserscanner entsteht hingegen ein regelmässiges Punktegitter, wie es in Fig. 6c dargestellt ist, da die Entfernungswerte äquiangular erfasst wurden, und deshalb alle Oberflächenpunkte in dieser Projektion auf eine Ebene näherungsweise gleichen Abstand zueinander haben.

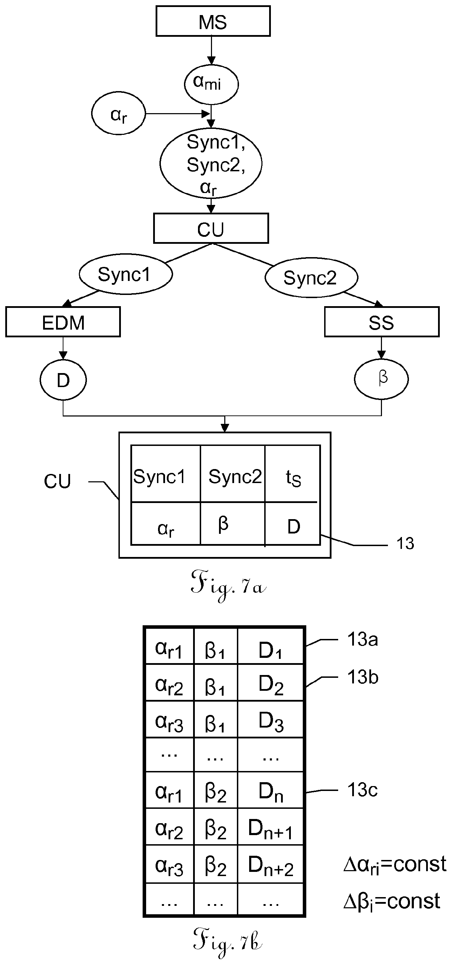

Fig. 7a zeigt das Prinzip eines erfindungsgemässen Messvorgangs mit erfindungsgemässem Messsystem nach Fig. 6a.
Der als Mastersensor fungierende Winkelsensor MS erfasst fortlaufend Winkelmesswerte αₘᵢ. Aus diesen werden wie oben beschrieben zu vorzugsweise äquidistanten Winkelsollwerten αᵣ Zeitpunkte extrapoliert, zu denen ein erstes Synchronisationssignal Sync1 gesendet wird und zu einer bestimmten Anzahl von ersten Synchronisationssignalen Sync1 ein zweites Synchronisationssignal Sync2. Insbesondere kann die Anzahl auch Eins betragen. Die Synchronisationssignale werden zusammen mit den zugrunde liegenden Winkelsollwerten αᵣ an die Steuer- und Auswerteeinheit CU gesendet. Der Winkelsollwert αᵣ wird von dieser gespeichert, die beiden Synchronisationssignale an die beiden Slavesensoren transferiert.

Das erste Synchronisationssignal Sync1 wird an den Laserdistanzmesser EDM übermittelt, während das weniger oft vorkommende zweite Synchronisationssignal Sync2 an den zweiten Winkelsensor SS übermittelt wird. Durch diese Aufteilung entsteht zeilenweise ein Messpunkteraster, da zu jedem Winkelsollwert αᵣ eine Distanzmessung des Laserdistanzmessers EDM durch das erste Synchronisationssignal Sync1 getriggert wird, wohingegen nur nach einer bestimmten Anzahl von Winkelsollwerten αᵣ eine Winkelbestimmung durch den Winkelsensor SS durch das zweite Synchronisationssignal Sync2 getriggert wird, der den Ausrichtungswinkel der langsam laufenden Achse bestimmt. Im Beispiel wird ein Messvorgang mit beiden Synchronisationssignalen betrachtet.

Die Distanzmessung durch den Laserdistanzmesser EDM ergibt einen Distanzwert D, die Winkelbestimmung durch den Winkelsensor SS einen Winkelwert β. Die beiden Sensorwerte werden an die Steuer- und Auswerteeinheit CU übertragen. Diese stellt die Sensorwerte Winkelsollwert αᵣ, Winkelwert β und Distanzwert D als zusammengehöriges Wertetupel 13 bereit. Zusätzlich sind im Beispiel das erste und das zweite Synchronisationssignal Sync1 und Sync2 und der zu den Synchronisationssignalen und Sensorwerten zugehörige Zeitpunkt t_{S} gespeichert.

Fig. 7b zeigt ein Beispiel für mehrere Wertetupel aus zusammengehörigen Sensorwerten für erfindungsgemässes Messsystem nach Fig. 6a. Zu einem ersten Winkelsollwert αᵣ₁ des Mastersensors wird ein Winkelwert β₁ des Slavewinkelsensors und ein Distanzwert D₁ des Laserdistanzmessers aufgenommen und als zusammengehöriger Datensatz 13a bereitgestellt. Für eine zeilenweise Rasterung bleibt der Winkelwert β₁ im folgenden Datensatz 13b zum nächsten Winkelsollwert αᵣ₂ gleich, zu dem ein zweiter Distanzwert D₂ gehört. Dies wird für eine bestimmte Anzahl n-1 von Winkelsollwerten αᵣ in gleicher Weise fortgeführt. Nach dieser Anzahl n-1 wird durch das zweite Synchronisationssignal Sync2 eine Aufnahme eines zweiten Winkelwerts β₂ und damit einer nächsten Zeile von Oberflächenpunkten getriggert. Der Winkelwert β₂ wird zusammen mit dem dem zweiten Synchronisationsignal Sync2 zugrunde liegenden Winkelsollwert und dem synchronisiert erfassten Distanzwert Dₙ als zusammengehöriger Datensatz 13c bereitgestellt, wobei in diesem Beispiel der Winkelsollwert wieder den Ausgangswert αᵣ₁ hat, um eine zeilenweise Rasterung zu bewirken. Dieser Vorgang wird nach erfindungsgemässen Verfahren fortgesetzt, im Beispiel unter Einhaltung von äquidistantem Abstand sowohl für die Winkelsollwerte als auch die Slavesensorwinkelwerte, also Δαᵣᵢ=const und Δβᵢ=const, womit durch erfindungsgemässes Synchronisationsverfahren ein gleichmässiges Punkteraster bzw. eine gleichmässige dreidimensionale Punktwolke aus der Vermessung einer Objektoberfläche gewonnen wird. Alternativ dazu lässt sich z.B. ein schraubenförmiges Scanmuster erhalten, indem zu jedem ersten Synchronisationssignal Sync1 ein zweites Synchronisationssignal Sync2 erstellt wird, wodurch beide Winkelsensoren jeweils neu einen Winkelwert aufnehmen.

## Patentansprüche

1. Synchronisationsverfahren für einen Mastersensor und mindestens einen Slavesensor zum synchronisierten Aufnehmen mindestens eines Sensorwerts durch den mindestens einen Slavesensor zu einem vorzugebenden Sollwert des Mastersensors
mit einem
• Erfassen eines ersten Zeit-Messwert-Paars durch den Mastersensor zu einem ersten Zeitpunkt,
• Erfassen mindestens eines zweiten Zeit-Messwert-Paars durch den Mastersensor zu einem zweiten Zeitpunkt,
• Bereitstellen einer Extrapolationsvorschrift durch Berechnen aus dem ersten Zeit-Messwert-Paar und mindestens dem zweiten Zeit-Messwert-Paar,
• Bereitstellen eines zu einem vorgegebenen Sollwert des Mastersensors zugehörigen extrapolierten Zeitpunktes anhand der Extrapolationsvorschrift,
• Senden eines ersten Synchronisationssignals an den mindestens einen Slavesensor beim Eintreten des extrapolierten Zeitpunktes und/oder beim Eintreten eines davon zeitlich definiert unterschiedenen Verzögerungszeitpunktes,
• Auslösen eines Aufnehmens mindestens eines Slavesensorwertes durch das erste Synchronisationssignal und
• Bereitstellen des Sollwertes und des mindestens einen Slavessensorwertes als zusammengehöriges Wertetupel.

2. Synchronisationsverfahren nach Anspruch 1,
**dadurch gekennzeichnet, dass**
die Synchronisation wertebasiert und prädiktiv erfolgt, dergestalt, dass ein Sollwert so vorgegeben wird, dass der zugehörige extrapolierte Zeitpunkt nach dem zweiten Zeitpunkt, insbesondere in der Zukunft, liegt, insbesondere wobei ein Mindestabstand zwischen aufeinander folgenden extrapolierten Zeitpunkten eingehalten wird.

3. Synchronisationsverfahren nach Anspruch 1 oder 2,
**dadurch gekennzeichnet, dass**
bei mindestens einem Slavesensor, insbesondere bei allen Slavesensoren, das Aufnehmen eines Sensorwertes das Erfassen eines Sensormesswertes ist.

4. Synchronisationsverfahren nach Anspruch 1 oder 2,
**dadurch gekennzeichnet, dass**
das Berechnen aus dem ersten Zeit-Messwert-Paar und dem mindestens zweiten Zeit-Messwert-Paar das Berechnen von Parameterwerten eines hinterlegten Extrapolationsalgorithmus mit dem ersten Zeit-Messwert-Paar und mindestens dem zweiten Zeit-Messwert-Paar ist, insbesondere unter Verwendung wenigstens eines weiteren Zustandsignals des Mastersensors, insbesondere wobei zuvor der hinterlegte Extrapolationsalgorithmus aus einer Mehrzahl von hinterlegten Extrapolationsalgorithmen, insbesondere automatisiert, ausgewählt wird.

5. Synchronisationsverfahren nach Anspruch 1 oder 2,
**dadurch gekennzeichnet, dass**
Mastersensormesswerte fortlaufend erfasst werden und eine Verfügbarkeit eines neuen Zeit-Messwert-Paars ein Bereitstellen einer aktualisierten Extrapolationsvorschrift mittels Neuberechnung der Parameterwerte mit dem neuen Zeit-Messwert-Paar auslöst, insbesondere wobei Abweichungen zwischen neuberechneten und bisher verwendeten Parameterwerten bestimmt werden und ein Verwenden der neuberechneten Parameterwerte nur erfolgt, falls die Abweichungen ein definiertes Mass nicht überschreiten.

6. Synchronisationsverfahren nach einem der vorangehenden Ansprüche,
**dadurch gekennzeichnet, dass**
der Abstand zwischen mehreren vorzugebenden Sollwerten äquidistant ist.

7. Synchronisationsverfahren nach einem der vorangehenden Ansprüche,
**dadurch gekennzeichnet, dass**
mindestens ein weiteres, insbesondere ein zweites, Synchronisationssignal gesendet wird, zu definierten Anzahlen von ersten Synchronisationssignalen, insbesondere dergestalt, dass das zweite Synchronisationssignal es ermöglicht, jedes erste Synchronisationssignal einem zugrunde liegenden Mastersensormesswert eindeutig zuzuordnen.

8. Synchronisationsverfahren nach Anspruch 7,
**dadurch gekennzeichnet, dass**
mit dem ersten Synchronisationssignal das Aufnehmen von Werten eines ersten Slavesensors oder einer Gruppe erster Slavesensoren und mit den weiteren Synchronisationssignalen das Aufnehmen von Werten weiterer Slavesensoren oder weiterer Gruppen von Slavesensoren ausgelöst wird.

9. Synchronisationsverfahren nach einem der vorangehenden Ansprüche,
**dadurch gekennzeichnet, dass**
der extrapolierte Zeitpunkt nach dem aus ihm abgeleiteten Verzögerungszeitpunkt liegt und der zeitliche Unterschied des Verzögerungszeitpunktes zum zugrunde liegenden extrapolierten Zeitpunkt dergestalt ist, dass durch das Senden des Synchronisationssignals zum Verzögerungszeitpunkt das Aufnehmen des Slavesensorwerts zum extrapolierten Zeitpunkt bewirkt wird.

10. Synchronisationsverfahren nach einem der vorangehenden Ansprüche,
**dadurch gekennzeichnet, dass**
innerhalb eines zusammengehörigen Wertetupels ein Ersetzen eines Sensorwertes durch den zum Zeitpunkt der Aufnahme eines Slavesensorwerts vorliegenden Sensorwert stattfindet, insbesondere derart, dass der Mastersensorsollwert durch einen zu diesem Zeitpunkt erfassten Mastersensormesswert oder durch einen für diesen Zeitpunkt aus erfassten Mastersensormesswerten extra- oder interpolierten Mastersensorwert ersetzt wird.

11. Synchronisationsverfahren nach einem der vorangehenden Ansprüche,
**dadurch gekennzeichnet, dass**
die Verfahrensschritte
• Bereitstellen eines extrapolierten Zeitpunkts zu einem vorgegebenen Sollwert,
• Senden mindestens eines Synchronisationssignals,
• Aufnehmen mindestens eines Slavesensorwertes,
• Bereitstellen von Sollwert und Slavesensorwert auch durchgeführt werden, wenn das Erfassen von Mastersensormesswerten nicht mehr stattfindet.

12. Synchronisationsverfahren nach einem der vorangehenden Ansprüche,
**dadurch gekennzeichnet, dass**
dem Erfassen eines Mastersensormesswertes das Auslesen eines Codes zugrunde liegt, insbesondere eines Positionscodes.

13. Sensormesssystem mit
• einem Mastersensor
• wenigstens einem Slavesensor mit Signalempfangseinheit, derart ausgebildet, dass der Slavesensor beim Empfang eines ersten Synchronisationssignals mindestens einen Sensorwert aufnimmt,
• einer Prozessoreinheit, derart ausgebildet, dass die Prozessoreinheit zu einem vorgegebenen Mastersensorsollwert einen Zeitpunkt anhand von wenigstens zwei zu verschiedenen Zeitpunkten erfassten Messwerten des Mastersensors extrapoliert,
• einer Signalsendeeinheit, derart ausgebildet, dass die Signalsendeeinheit beim Erreichen des extrapolierten Zeitpunkts ein erstes Synchronisationssignal sendet und
• einer Datenspeichereinheit, derart ausgebildet, dass die Datenspeichereinheit mindestens Wertetupel aus Mastersensorsollwert und dem zugehörigen mindestens einen Slavesensorwert bereitstellt, wobei das Sensormesssystem ausgebildet ist, um das Aufnehmen des mindestens eines Slavesensorwertes durch das erste Synchronisationssignal auszulösen.

14. Sensormesssystem nach Anspruch 13,
**gekennzeichnet durch**
eine Steuer- und Auswerteeinheit mit Zeitgeber, derart ausgebildet, dass die Steuer- und Auswerteeinheit Synchronisationssignale, Zeitwerte und Sensorwerte empfängt, bereitstellt, sendet und auswertet, insbesondere wobei die Steuer- und Auswerteeinheit die zu Sensorwerten gehörigen Zeitpunkte bzw. Aufnahmezeitpunkte für eine nachgelagerte Datenverarbeitung bereitstellt.

15. Sensormesssystem nach einem der Ansprüche 13 bis 14,
**dadurch gekennzeichnet, dass**
das System ein Laserscanner ist, der aufweist
• als ersten Slavesensor einen Laserdistanzmesser,
• als Mastersensor einen Winkelmesser, der den ersten Richtungswinkels der Strahlrichtung des Laserdistanzmessers bestimmt,
• als zweiten Slavesensor einen Winkelmesser, der den zweiten Richtungswinkels der Strahlrichtung des Laserdistanzmessers bestimmt,
• eine Steuer- und Auswerteeinheit.

## Claims

1. Synchronization method for a master sensor and at least one slave sensor, for synchronized recording of at least one sensor value by the at least one slave sensor in relation to an intended value of the master sensor to be predetermined,
comprising a:
• collection of a first time/measured value pair by the master sensor at a first time,
• collection of at least a second time/measured value pair by the master sensor at a second time,
• provision of an extrapolation rule by calculation from the first time/measured value pair and at least the second time/measured value pair,
• provision of an extrapolated time associated with a predetermined intended value of the master sensor, on the basis of the extrapolation rule,
• transmission of a first synchronization signal to the at least one slave sensor when the extrapolated time occurs and/or when a delay time, different from the extrapolated time in a temporally defined manner, occurs,
• triggering of a recording of at least one slave sensor value by the first synchronization signal and
• provision of the intended value and the at least one slave sensor value as connected value tuple.

2. Synchronization method according to Claim 1,
**characterized in that**
the synchronization is value-based and predictive in such a way that an intended value is predetermined in such a way that the associated extrapolated time lies after the second time, in particular in the future, in particular with a minimum interval being maintained between successive extrapolated times.

3. Synchronization method according to Claim 1 or 2,
**characterized in that,**
in at least one slave sensor, in particular in all slave sensors, recording of a sensor value is collecting a sensor measured value.

4. Synchronization method according to Claim 1 or 2,
**characterized in that**
the calculation from the first time/measured value pair and the at least second time/measured value pair is the calculation of parameter values of a stored extrapolation algorithm with the first time/measured value pair and at least the second time/measured value pair, in particular using at least one further state signal of the master sensor, in particular with the stored extrapolation algorithm being selected in advance, in particular in an automated manner, from a plurality of stored extrapolation algorithms.

5. Synchronization method according to Claim 1 or 2,
**characterized in that**
master sensor measured values are collected continuously and an availability of a new time/measured value pair triggers a provision of an updated extrapolation rule by means of newly calculating the parameter values using the new time/measured value pair, in particular with deviations being determined between newly calculated and previously utilized parameter values and use of the newly calculated parameter values only occurring if the deviations do not exceed a defined amount.

6. Synchronization method according to any one of the preceding claims,
**characterized in that**
the spacing between a plurality of intended values to be predetermined is equidistant.

7. Synchronization method according to any one of the preceding claims,
**characterized in that**
at least one further synchronization signal, in particular a second synchronization signal, is transmitted, in relation to defined numbers of first synchronization signals, in particular in such a way that the second synchronization signal renders it possible to assign each first synchronization signal uniquely to an underlying master sensor measured value.

8. Synchronization method according to Claim 7,
**characterized in that**
the recording of values of a first slave sensor or of a group of first slave sensors is triggered by the first synchronization signal and the recording of values of further slave sensors or of further groups of slave sensors is triggered by the further synchronization signals.

9. Synchronization method according to any one of the preceding claims,
**characterized in that**
the extrapolated time lies after the delay time derived therefrom and the time difference between the delay time and the underlying extrapolated time is such that the transmission of the synchronization signal at the delay time causes the recording of the slave sensor value at the extrapolated time.

10. Synchronization method according to any one of the preceding claims,
**characterized in that,**
within a connected value tuple, one sensor value is replaced by the sensor value available at the time of recording a slave sensor value, in particular in such a way that the master sensor intended value is replaced by a master sensor measured value collected at this time or by a master sensor value extrapolated or interpolated for this time from collected master sensor measured values.

11. Synchronization method according to any one of the preceding claims,
**characterized in that**
the method steps
• provision of an extrapolated time in relation to a predetermined intended value,
• transmission of at least one synchronization signal,
• recording of at least one slave sensor value,
• provision of intended value and slave sensor value are also carried out when master sensor measured values are no longer collected.

12. Synchronization method according to any one of the preceding claims,
**characterized in that**
the collection of a master sensor measured value is based on reading-out a code, in particular a position code.

13. Sensor measuring system, comprising
• a master sensor,
• at least one slave sensor with signal reception unit, embodied in such a way that the slave sensor records at least one sensor value when receiving a first synchronization signal,
• a processing unit, embodied in such a way that the processor unit, in relation to a predetermined master sensor intended value, extrapolates a time on the basis of at least two measured values of the master sensor, collected at different times,
• a signal transmission unit, embodied in such a way that the signal transmission unit transmits a first synchronization signal when the extrapolated time is reached, and
• a data storage unit, embodied in such a way that the data storage unit provides at least one value tuple made of master sensor intended value and the associated at least one slave sensor value,
wherein the sensor measuring system is configured to trigger the recording of the at least one slave sensor value by the first synchronization signal.

14. Sensor measuring system according to Claim 13,
**characterized by**
a control and evaluation unit with clock, embodied in such a way that the control and evaluation unit receives, provides, transmits and evaluates synchronization signals, time values and sensor values, in particular with the control and evaluation unit providing the times or recording times, associated with sensor values, for downstream data processing.

15. Sensor measuring system according to any one of claims 13 to 14,
**characterized in that**
the system is a laser scanner comprising:
• a laser rangefinder as first slave sensor,
• an angle measuring unit, which determines the first direction angle of the beam direction of the laser rangefinder, as master sensor,
• an angle measuring unit, which determines the second direction angle of the beam direction of the laser rangefinder, as second slave sensor,
• a control and evaluation unit.

## Revendications

1. Procédé de synchronisation d'un capteur maître et d'au moins un capteur esclave pour la détection synchronisée d'au moins une valeur de capteur par ledit au moins un capteur esclave pour une valeur de consigne à prédéfinir du capteur maître, comprenant les étapes suivantes
• acquisition d'une première paire valeur de mesure - temps par le capteur maître à un premier instant,
• acquisition d'au moins une deuxième paire valeur de mesure - temps par le capteur maître à un deuxième instant,
• mise à disposition d'une règle d'extrapolation par calcul à partir de la première paire valeur de mesure - temps et d'au moins la deuxième paire valeur de mesure - temps,
• mise à disposition d'un instant extrapolé associé à une valeur de consigne prédéfinie du capteur maître à l'aide de la règle d'extrapolation,
• envoi d'un premier signal de synchronisation audit au moins un capteur esclave à la survenue de l'instant extrapolé et/ou à la survenue d'un instant de retard qui en diffère de manière temporellement définie,
• déclenchement d'une acquisition d'au moins une valeur de capteur esclave par le premier signal de synchronisation et
• mise à disposition de la valeur de consigne et de ladite au moins une valeur de capteur esclave en tant que tuple de valeurs formant un ensemble.

2. Procédé de synchronisation selon la revendication 1,
**caractérisé en ce que**
la synchronisation a lieu de manière basée sur des valeurs et prédictive, de façon à ce qu'une valeur de consigne soit prédéfinie de telle sorte que l'instant extrapolé associé se situe après le deuxième instant, en particulier dans le futur, en particulier un intervalle minimal étant maintenu entre des instants extrapolés successifs.

3. Procédé de synchronisation selon la revendication 1 ou 2,
**caractérisé en ce que**,
pour au moins un capteur esclave, en particulier pour tous les capteurs esclaves, l'acquisition d'une valeur de capteur est la détection d'une valeur de mesure de capteur.

4. Procédé de synchronisation selon la revendication 1 ou 2,
**caractérisé en ce que**
le calcul à partir de la première paire valeur de mesure - temps et de ladite au moins deuxième paire valeur de mesure - temps consiste à calculer des valeurs de paramètres d'un algorithme d'extrapolation enregistré avec la première paire valeur de mesure - temps et au moins la deuxième paire valeur de mesure - temps, en particulier en utilisant au moins un autre signal d'état du capteur maître, en particulier l'algorithme d'extrapolation enregistré étant sélectionné préalablement parmi une pluralité d'algorithmes d'extrapolation enregistrés, en particulier de manière automatisée.

5. Procédé de synchronisation selon la revendication 1 ou 2,
**caractérisé en ce que**
des valeurs de mesure de capteur maître sont acquises en continu et une disponibilité d'une nouvelle paire valeur de mesure - temps déclenche une mise à disposition d'une règle d'extrapolation actualisée au moyen d'un recalcul des valeurs de paramètres avec la nouvelle paire valeur de mesure - temps, en particulier dans lequel des écarts entre des valeurs de paramètres recalculées et utilisées précédemment sont déterminés et les valeurs de paramètres recalculées ne sont utilisées que si les écarts ne dépassent pas une mesure définie.

6. Procédé de synchronisation selon l'une des revendications précédentes,
**caractérisé en ce que**
l'intervalle entre plusieurs valeurs de consigne à prédéfinir est équidistant.

7. Procédé de synchronisation selon l'une des revendications précédentes,
**caractérisé en ce**
**qu'**au moins un autre signal de synchronisation, en particulier un deuxième signal de synchronisation, est envoyé pour des nombres définis de premiers signaux de synchronisation, en particulier de façon à ce que le deuxième signal de synchronisation permette d'associer sans ambiguïté chaque premier signal de synchronisation à une valeur de mesure de capteur maître sous-jacente.

8. Procédé de synchronisation selon la revendication 7,
**caractérisé en ce que**
le premier signal de synchronisation est utilisé pour déclencher l'acquisition de valeurs d'un premier capteur esclave ou d'un groupe de premiers capteurs esclaves et les autres signaux de synchronisation sont utilisés pour déclencher l'enregistrement de valeurs d'autres capteurs esclaves ou d'autres groupes de capteurs esclaves.

9. Procédé de synchronisation selon l'une des revendications précédentes,
**caractérisé en ce que**
l'instant extrapolé se situe après l'instant de retard qui en est dérivé et la différence temporelle entre l'instant de retard et l'instant extrapolé sous-jacent est telle que l'acquisition de la valeur de capteur esclave à l'instant extrapolé est provoquée par l'envoi du signal de synchronisation à l'instant de retard.

10. Procédé de synchronisation selon l'une des revendications précédentes,
**caractérisé en ce**
**qu'**une valeur de capteur est remplacée à l'intérieur d'un tuple de valeurs formant un ensemble par la valeur de capteur présente à l'instant de l'acquisition d'une valeur de capteur esclave, en particulier de telle sorte que la valeur de consigne de capteur maître est remplacée par une valeur de mesure de capteur maître détectée à cet instant ou par une valeur de capteur maître extrapolée ou interpolée pour cet instant à partir de valeurs de mesure de capteur maître détectées.

11. Procédé de synchronisation selon l'une des revendications précédentes,
**caractérisé en ce que** les étapes de procédé suivantes
• mise à disposition d'un instant extrapolé pour une valeur de consigne prédéfinie,
• envoi d'au moins un signal de synchronisation,
• détection d'au moins une valeur de capteur esclave,
• mise à disposition de la valeur de consigne et de la valeur de capteur esclave sont également exécutées lorsque l'acquisition de valeurs de mesure de capteur maître n'a plus lieu.

12. Procédé de synchronisation selon l'une des revendications précédentes,
**caractérisé en ce que**
la détection d'une valeur de mesure de capteur maître est basée sur la lecture d'un code, en particulier d'un code de position.

13. Système de mesure par capteurs comprenant
• un capteur maître
• au moins un capteur esclave avec une unité de réception de signal, conçu de telle sorte que le capteur esclave détecte au moins une valeur de capteur à la réception d'un premier signal de synchronisation,
• une unité processeur, conçue de telle sorte que l'unité processeur extrapole un instant pour une valeur de consigne de capteur maître prédéfinie à l'aide d'au moins deux valeurs de mesure du capteur maître détectées à des instants différents,
• une unité d'émission de signal, conçue de telle sorte que l'unité d'émission de signal envoie un premier signal de synchronisation lorsque l'instant extrapolé est atteint et
• une unité de stockage de données, conçue de telle sorte que l'unité de stockage de données met à disposition au moins un tuple de valeurs formé de la valeur de consigne de capteur maître et de ladite au moins une valeur de capteur esclave associée,
le système de mesure de capteur étant conçu pour déclencher la détection de ladite au moins une valeur de capteur esclave par le premier signal de synchronisation.

14. Système de mesure par capteurs selon la revendication 13,
**caractérisé par**
une unité de commande et d'évaluation dotée d'une horloge, conçue de telle sorte que l'unité de commande et d'évaluation reçoit, met à disposition, envoie et évalue des signaux de synchronisation, des valeurs de temps et des valeurs de capteur, en particulier dans lequel l'unité de commande et d'évaluation met à disposition les instants, respectivement instants de détection, associés à des valeurs de capteur pour un traitement de données en aval.

15. Système de mesure par capteurs selon l'une des revendications 13 à 14,
**caractérisé en ce que**
le système est un scanner laser qui présente
• comme premier capteur esclave un distancemètre laser,
• comme capteur maître un rapporteur d'angle qui détermine le premier angle directionnel de la direction de faisceau du distancemètre laser,
• comme deuxième capteur esclave un rapporteur d'angle qui détermine le deuxième angle directionnel de la direction de faisceau du distancemètre laser,
• une unité de commande et d'évaluation.
